# EUROPÄISCHE PATENTANMELDUNG

(11) **EP 0 875 775 A2**
(43) Veröffentlichungstag der Anmeldung: **04.11.1998**
(21) Anmeldenummer: 98106087.4
(22) Anmeldetag: 02.04.1998
(51) Int. Cl.: G01V 8/10

(54) **Verfahren zum Betrieb eines opto-elektronischen Sensors**

(30) Priorität: 30.04.1997 DE 19718391
(71) Anmelder: Sick AG, 79183 Waldkirch, Breisgau (DE)
(72) Erfinder: Blümcke, Thomas, 79261 Gutach (DE); Walsowski, Kai, 79312 Emmendingen (DE); Kietz, Daniel, 79642 Riegel (DE)
(74) Vertreter: Manitz, Finsterwald & Partner

(57) **Zusammenfassung**

Die Erfindung betrifft ein Verfahren zum Betrieb eines optoelektronischen Sensors, insbesondere einer Lichtschranke, bei dem mittels eines Lichtsenders ein Lichtsignal in einen Überwachungsbereich gesandt wird und ein zum Empfang von ausgesandten und reflektieren Lichtsignalen ausgelegter Lichtempfänger ein Signal liefert, dessen Amplitude auf Vorhandensein eines Objekts im Überwachungsbereich untersucht wird, wobei bei Über- oder Unterschreitung eines Amplituden-Schwellwerts ein Gegenstandsfeststellungssignal abgegeben wird, bei dem vor Inbetriebnahme des Sensors im Rahmen eines Initialisierungsprozesses bei objektfreiem Überwachungsbereich der Schwellwert in Abhängigkeit von in einem bestimmten Meßzeitraum aufgetretenen Amplitudenwerten automatisch eingestellt und dadurch an die während des Initialisierungsprozesses gegebenen Betriebsbedingungen angepaßt wird oder bei dem der Schwellwert während des Sensorbetriebs in Abhängigkeit von in einem bestimmten Meßzeitraum aufgetretenen Amplitudenwerten automatisch verstellt und dadurch an die jeweils gegebenen Betriebsbedingungen angepaßt wird.

## Beschreibung

Die Erfindung betrifft ein Verfahren zum Betrieb eines optoelektronischen Sensors, insbesondere einer Lichtschranke, bei dem mittels eines Lichtsenders ein Lichtsignal in einen Überwachungsbereich gesandt wird und ein zum Empfang von ausgesandten und reflektieren Lichtsignalen ausgelegter Lichtempfänger ein Signal liefert, dessen Amplitude auf Vorhandensein eines Objekts im Überwachungsbereich untersucht wird, wobei bei Über- oder Unterschreitung eines Amplituden-Schwellwerts ein Gegenstandsfeststellungssignal abgegeben wird.

Für das zufriedenstellende Funktionieren derartiger Verfahren ist es wesentlich, daß der genannte Amplituden-Schwellwert korrekt eingestellt ist, da bei einer unzureichenden Einstellung des Amplituden-Schwellwerts nicht ausgeschlossen werden kann, daß ein Gegenstandsfeststellungssignal abgegeben wird, obwohl kein Objekt im Überwachungsbereich vorhanden ist oder daß kein Gegenstandsfeststellungssignal abgegeben wird, obwohl ein Objekt im Überwachungsbereich vorhanden ist.

Zur Einstellung des Amplituden-Schwellwerts ist es bekannt, diesen beispielsweise manuell mittels eines Potentiometers vom Benutzer auf einen geeigneten Wert einstellen zu lassen, wobei ein derartiges manuelles Verfahren naturgemäß mit Ungenauigkeiten behaftet ist.

Weiterhin ist es zumindest gemäß internem Stand der Technik der Anmelderin bekannt, Teach-in-Verfahren einzusetzen, bei denen in den Überwachungsbereich des opto-elektronischen Sensors ein Objekt eingebracht, die dabei empfangene Signalamplitude mit einem Faktor bewertet und gespeichert und dieser gespeicherte Wert als künftiger Amplituden-Schwellwert verwendet wird.

Letztgenanntes Verfahren besitzt den Nachteil, daß der Aufwand des Einbringens des Objektes in den Überwachungsbereich betrieben werden muß und aufgrund verschiedener Eigenschaften der eingebrachten Objekte, insbesondere aufgrund verschiedener Reflektivitäten, verschiedener Abstände zum Sensor sowie verschiedener geometrischer Formen der Objekte nicht sichergestellt werden kann, daß man im Rahmen des Teach-in-Verfahrens immer den für die Einstellung des Amplituden-Schwellwerts maßgeblichen Fall erfaßt.

Weiterhin ist von Nachteil, daß ein einmal festgelegter Amplituden-Schwellwert während der Betriebszeit des Sensors konstant bleibt und somit betriebsbedingten Lichtleistungsschwankungen, die beispielsweise durch Verschmutzung oder Alterung der Lichtsender bedingt sind, nicht Rechnung tragen kann, so daß es zu Fehlerkennungen von Objekten im Überwachungsbereich kommt.

Eine Aufgabe der Erfindung besteht darin, ein Verfahren der eingangs genannten Art derart zu verbessern, daß eine möglichst exakte und den tatsächlich gegebenen Betriebsbedingungen Rechnung tragende Festlegung des Amplituden-Schwellwerts zum Betriebsbeginn möglich wird und/oder daß auch während des Betriebs des Sensors auftretende Lichtleistungsschwankungen auf geeignete Weise kompensiert werden können.

Gemäß einem ersten erfindungsgemäßen Lösungsansatz wird die auf die korrekte Einstellung des Amplituden-Schwellwerts zu Beginn des Sensorbetriebs bezogene Aufgabe dadurch gelöst, daß vor Inbetriebnahme des Sensors im Rahmen eines Initialisierungsprozesses bei objektfreiem Überwachungsbereich der Schwellwert in Abhängigkeit von in einem bestimmten Meßzeitraum aufgetretenen Amplitudenwerten automatisch eingestellt und dadurch an die während des Initialisierungsprozesses gegebenen Betriebsbedingungen angepaßt wird.

Ein Unterschied zu den bisher bekannten Verfahren besteht folglich darin, daß während des Initialisierungsprozesses bzw. während der erstmaligen Festlegung des Amplituden-Schwellwerts am Einsatzort des Sensors kein Objekt in den Überwachungsbereich eingebracht werden muß, so daß die vorstehend erläuterten, mit der Einbringung eines Testobjektes verbundenen Fehlerquellen beseitigt sind. Zudem wird erfindungsgemäß eine automatische Einstellung des Schwellwerts möglich, so daß durch Fehlbedienungen auftretende Fehler weitgehend ausgeschlossen werden können.

Der im Rahmen des Initialisierungsprozesses festzulegende Schwellwert kann erfindungsgemäß beispielsweise dadurch bestimmt werden, daß die Häufigkeitsverteilung der während des Meßzeitraums auftretenden Amplituden ermittelt und der Schwellwert durch das Maximum der ermittelten Häufigkeitsverteilung definiert wird. Der Meßzeitraum entspricht dabei im wesentlichen der Dauer des Initialisierungsprozesses. Je nach Bedarf kann dieser Meßzeitraum auf wenige Sekunden oder aber auch auf mehrere Minuten eingestellt werden.

Die genannte Bestimmung des Schwellwerts mittels einer Häufigkeitsverteilung läßt sich auf einfache Weise mit geringem Aufwand durch den Einsatz eines mit bekannten Algorithmen programmierten Mikroprozessors realisieren, so daß die Wirtschaftlichkeit des erfindungsgemäßen Verfahrens nicht nur dadurch bedingt ist, daß der Vorgang des Einbringens eines Testobjekts in den Überwachungsbereich entfällt, sondern zusätzlich auch dadurch, daß das erfindungsgemäße Verfahren mit geringem wirtschaftlichen Aufwand umsetzbar ist.

Von Vorteil ist es, wenn ein den Schwellwert bzw. das Maximum der ermittelten Häufigkeitsverteilung umgebender Toleranzbereich bestimmt wird, wobei die Breite des Toleranzbereichs beispielsweise abhängig vom Kurvenverlauf der ermittelten Häufigkeitsverteilung im Bereich des Maximums sein kann. Wenn die Werte der Häufigkeitsverteilung im Bereich des Maximums dicht beim Maximum liegen, kann der Toleranzbereich relativ klein gewählt werden, wenn die genannten Werte einen größeren Abstand zum Maximum aufweisen, kann der Toleranzbereich entsprechend größer gewählt werden.

Der Toleranzbereich ist in dem genannten Fall für die Abgabe eines Gegenstands-Feststellungssignals maßgeblich, da die Abgabe eines solchen Signals beispielsweise immer dann erfolgt, wenn eine während des Betriebs des Sensors ermittelte Amplitude außerhalb des festgelegten Toleranzbereichs liegt.

Diejenige, der Erfindung zugrundeliegende Aufgabe, welche die Kompensation der betriebsbedingten Lichtleistungsschwankungen betrifft, wird erfindungsgemäß dadurch gelöst, daß der Schwellwert während des Sensorbetriebs in Abhängigkeit von in einem bestimmten Meßzeitraum auftretenden Amplitudenwerten automatisch nachgestellt und dadurch an die jeweils gegebenen Betriebsbedingungen angepaßt wird.

Der Schwellwert wird folglich nicht wie bei aus dem Stand der Technik bekannten Verfahren während des Betriebs des Sensors konstant gehalten, sondern individuell entsprechend den jeweils auftretenden Betriebsbedingungen nachgestellt.

Eine Nachstellung bzw. Anpassung des Schwellwerts kann dabei während des Sensorbetriebs beispielsweise in einem konstanten Zeitraster wiederholt werden.

Die Anpassung des Schwellwerts erfolgt in Abhängigkeit von in einem bestimmten Meßzeitraum aufgetretenen Amplitudenwerten, wobei der Meßzeitraum ein Intervall definierter Länge sein kann, welches immer mit dem Zeitpunkt der Anpassung endet. Ebenso ist es möglich, den Meßzeitraum so zu bemessen, daß grundsätzlich alle Amplituden berücksichtigt werden, die zwischen der Inbetriebnahme des Sensors und dem jeweils vorgenommenen Anpassungsvorgang aufgetreten sind.

Bevorzugt ist es, wenn auch beim erfindungsgemäßen automatischen Nachstellen des Schwellwerts die Häufigkeitsverteilung der während des Meßzeitraums auftretenden Amplituden ermittelt und ein neuer bzw. angepaßter Schwellwert durch das Maximum der ermittelten Häufigkeitsverteilung definiert wird, wobei hier nicht unbedingt das absolute Maximum der Häufigkeitsverteilung maßgeblich sein muß, sondern in der Regel das relative Maximum im Bereich eines bereits zuvor bestimmten Maximums herangezogen wird. Hierdurch ergeben sich die vorstehend bereits beschriebenen Vorteile.

Weiterhin ist es auch in diesem Fall bevorzugt, wenn ein das jeweils bestimmte relative Maximum der jeweils ermittelten Häufigkeitsverteilung umgebender Toleranzbereich bestimmt wird, wobei die Breite des Toleranzbereichs wiederum in Abhängigkeit des Kurvenverlaufs der ermittelten Häufigkeitsverteilung im Bereich des Maximums festgelegt werden kann.

Der Toleranzbereich kann in diesem Fall zwei Funktionen erfüllen:

Zum einen kann ein während des Betriebs ermittelter und außerhalb des Toleranzbereichs liegender Amplitudenwert wiederum zur Abgabe eines Gegenstandsfeststellungssignals führen.

Andererseits kann die Durchführung eines erfindungsgemäßen Verfahrens zur Anpassung des Schwellwerts auf diejenigen Fälle beschränkt werden, in denen ein während des Sensorbetriebs ermitteltes Maximum der Häufigkeitsverteilung innerhalb des im Rahmen des vorhergehenden Anpassungsvorgangs bestimmten Toleranzbereichs liegt. Auf diese Weise läßt sich das genannte relative Maximum bestimmen und dabei wird sichergestellt, daß keine Fehlanpassung vorgenommen wird, da eine Anpassung immer nur dann erfolgt, wenn ein ermittelter angepaßter Schwellwert nur in bestimmten Grenzen von dem zuvor ermittelten Schwellwert abweicht. Falls eine größere Abweichung auftreten sollte, d.h. wenn ein ermittelter Schwellwert außerhalb des zuvor bestimmten Toleranzbereichs liegt, kann der Sensor dies signalisieren, woraufhin vom Benutzer eine neue Initialisierung des Sensors vorgenommen werden muß. Diese Initialisierung kann dann beispielsweise gemäß dem eingangs beschriebenen Initialisierungsprozeß vorgenommen werden.

Besonders vorteilhaft ist es, wenn die beiden vorstehend beschriebenen Lösungsansätze beide gemeinsam in einem Sensor realisiert werden, so daß zum einen die Initialisierung des Sensors, zum anderen jedoch auch das Nachstellen des Schwellwerts jeweils erfindungsgemäß erfolgt.

Die erfindungsgemäßen Verfahren können beispielsweise beim Betrieb einer Reflex-Lichtschranke eingesetzt werden. Eine Reflex-Lichtschranke zeichnet sich dadurch aus, daß die ausgesandten Lichtsignale bei objektfreiem Überwachungsbereich von einem am dem Sensor gegenüberliegenden Ende des Überwachungsbereichs angeordneten Reflektor zum Lichtempfänger reflektiert werden.

Ebenso ist es möglich, die erfindungsgemäßen Verfahren bei Betrieb eines energetischen Tasters einzusetzen. Bei einem energetischen Taster werden die ausgesandten Lichtsignale bei objektfreiem Überwachungsbereich nicht zum Lichtempfänger reflektiert, da hier am Ende des Überwachungsbereichs kein Reflektor vorgesehen ist. Ein Reflektieren der ausgesandten Lichtsignale erfolgt bei einem energetischen Taster nur dann, wenn ein reflektierendes und zu erkennendes Objekt im Überwachungsbereich vorhanden ist.

Bevorzugt ist es, wenn die erfindungsgemäßen Verfahren zur Klarglaserkennung verwendet werden.

Weitere bevorzugte Ausführungsformen der Erfindung sind in den Unteransprüchen angegeben.

Die Erfindung wird nachstehend anhand von Ausführungsbeispielen unter Bezugnahme auf die Zeichnungen erläutert; in diesen zeigen:
- Fig. 1: eine während eines Initialisierungsprozesses bei einer Reflex-Lichtschranke ermittelte Häufigkeitsverteilung,
- Fig. 2: eine während des Betriebs einer Reflex-Lichtschranke ermittelte Häufigkeitsverteilung,
- Fig. 3: eine während eines Initialisierungsprozesses bei einem energetischen Taster ermittelte Häufigkeitsverteilung, und
- Fig. 4: eine während des Betriebs eines energetischen Tasters ermittelte Häufigkeitsverteilung.

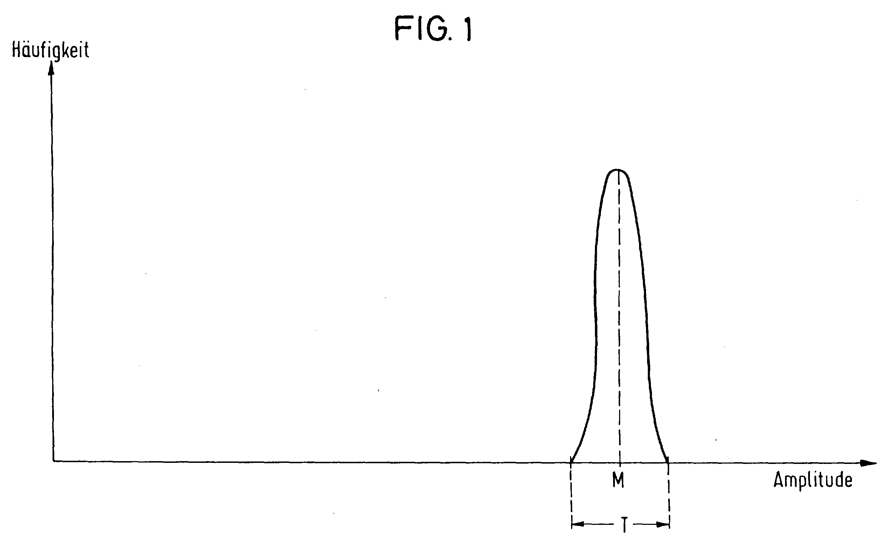

Fig. 1 zeigt, daß während eines erfindungsgemäßen Initialisierungsprozesses einer Reflex-Lichtschranke im wesentlichen nur Amplituden in einem relativ eng begrenzten Bereich ermittelt werden, wobei diese Amplituden derjenigen Lichtmenge entsprechen, die durch Reflexion des ausgesandten Lichts am Reflektor der Reflex-Lichtschranke zurück zum Lichtempfänger gelangt. Dies veranschaulicht, daß beim Betrieb einer Reflex-Lichtschranke mit objektfreiem Überwachungsbereich relativ viel Licht zurück zum Lichtempfänger gelangt, so daß die ermittelte Amplitude vergleichsweise hoch ist.

Erfindungsgemäß wird dann das Maximum M der ermittelten Häufigkeitsverteilung bestimmt, welches von einem ebenfalls erfindungsgemäß bestimmten Toleranzbereich T umgeben wird, dessen Breite vom Kurvenverlauf der Häufigkeitsverteilung im Bereich des Maximums M abhängt.

Das Maximum M sowie der Toleranzbereich T werden im Sensor gespeichert, und beim Betrieb des Sensors wird ein Gegenstandsfeststellungssignal immer dann abgegeben, wenn eine ermittelte Amplitude außerhalb des Toleranzbereichs T liegt, insbesondere wenn eine ermittelte Amplitude unterhalb der unteren Grenze des Toleranzbereichs T liegt.

Beim Betrieb einer Reflex-Lichtschranke verursacht ein in den Überwachungsbereich eingebrachtes Objekt in der Regel eine Reduzierung der empfangenen Lichtmenge, da das Objekt meist schlechter reflektiert als der am Ende des Überwachungsbereichs vorgesehene Reflektor. Insofern ist für die Abgabe eines Gegenstandsfeststellungssignals in der Regel ein Unterschreiten des Toleranzbereichs maßgeblich.

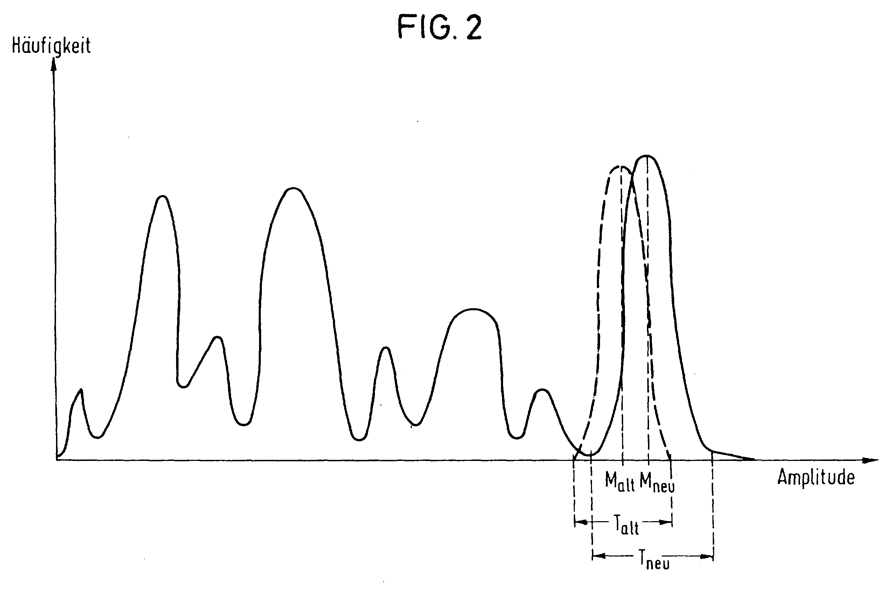

Die in Fig. 2 gezeigten Häufigkeitsverteilungen veranschaulichen die Durchführung eines erfindungsgemäßen Schwellwert-Anpassungsverfahrens, welches beispielsweise im Anschluß an einen Initialisierungsprozeß gemäß Fig. 1 durchgeführt wird.

In Fig. 2 ist gestrichelt die Häufigkeitsverteilung gemäß Fig. 1 gezeigt, die im Rahmen des Initialisierungsprozesses ermittelt wurde. Diese Häufigkeitsverteilung besitzt gemäß Fig. 2 das Maximum Mₐₗₜ sowie den dieses Maximum umgebenden Toleranzbereich Tₐₗₜ.

Wenn nun der Sensor nach Abschluß des Initialisierungsverfahrens in Betrieb geht und die Häufigkeitsverteilung der während dieses Betriebs auftretenden Amplituden ermittelt wird, ergibt sich beispielsweise der in Fig. 2 durchgezogen gezeichnete Kurvenverlauf. Dieser Kurvenverlauf weist mehrere Maxima auf, wobei das der höchsten Amplitude zugeordnete Maximum Mₙₑᵤ von Reflexionen am Reflektor der Reflex-Lichtschranke herrührt und die unterhalb dieses Maximums Mₙₑᵤ liegenden Maxima auf Reflexionen zurückgehen, die durch in den Überwachungsbereich eingebrachte Objekte bewirkt werden. In Anwendungsfällen, bei denen die meiste Zeit Objekte im Überwachungsbereich vorhanden sind, können die Häufigkeiten der durch Objekte hervorgerufenen Maxima ausgeprägter bzw. größer sein als das durch den Reflektor bedingte Maximum. Wenn erfindungsgemäß mit der Bestimmung eines relativen Maximums gearbeitet wird, ist das beschriebenen Verfahren jedoch auch in diesem Fall problemlos einsetzbar.

Im Rahmen des erfindungsgemäßen Anpassungsverfahrens wird nun untersucht, ob innerhalb des Toleranzbereichs Tₐₗₜ ein Maximum vorhanden ist. Bei Feststellung eines solchen relativen Maximums wird dessen Position bestimmt und die entsprechende Amplitude Mₙₑᵤ als neuer, für den Schwellwert maßgeblicher Wert gespeichert. Zusätzlich wird der das neue relative Maximum Mₙₑᵤ umgebende Toleranzbereich Tₙₑᵤ festgelegt, welcher wiederum von dem aktuellen Kurvenverlauf der Häufigkeitsverteilung im Bereich des Maximums Mₙₑᵤ abhängig ist.

Anschließend werden die zuvor gültigen Werte Mₐₗₜ und Tₐₗₜ verworfen und die Werte Mₙₑᵤ und Tₙₑᵤ als neue gültige Werte gespeichert, d.h. die Abgabe eines Gegenstandsfeststellungssignals nach Durchführung des beschriebenen Anpassungsvorgangs erfolgt immer dann, wenn eine beim Betrieb des Sensors ermittelte Amplitude außerhalb des Toleranzbereichs Tₙₑᵤ liegt.

Der beschriebene Vorgang kann nun zyklisch wiederholt werden, wobei für die Durchführung des Anpassungsvorgangs jeweils die zuletzt ermittelten Maximum- und Toleranzbereichwerte maßgeblich sind.

Somit ist ein kontinuierliches Verschieben des für die Abgabe eines Gegenstandsfeststellungssignals maßgeblichen Schwellwerts bzw. des hierfür maßgeblichen Toleranzbereichs entsprechend sich ändernder Betriebsbedingungen möglich.

Sollte im Rahmen eines Anpassungsvorgangs festgestellt werden, daß innerhalb eines gerade geltenden Toleranzbereichs kein relatives Maximum ermittelt werden kann, bzw. daß nur Maxima existieren, die außerhalb des Toleranzbereichs liegen, kann beispielsweise ein neuer Initialisierungsprozeß gemäß Fig. 1 ausgelöst oder angefordert werden.

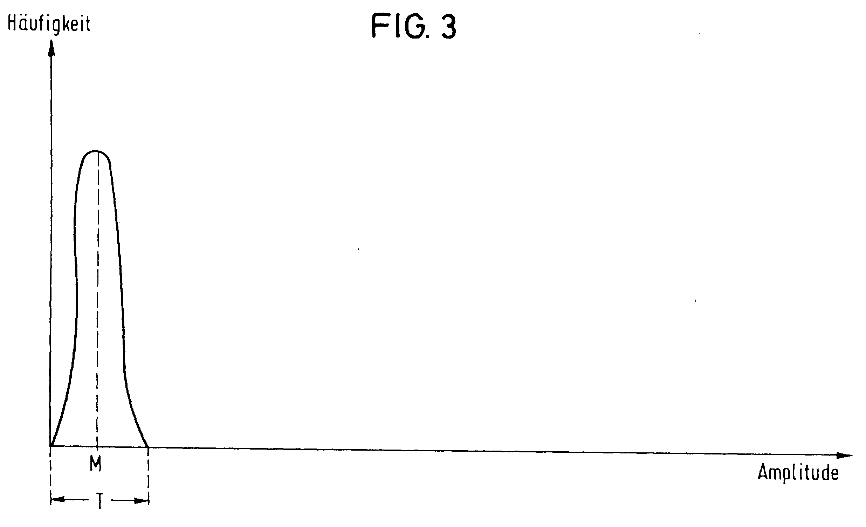

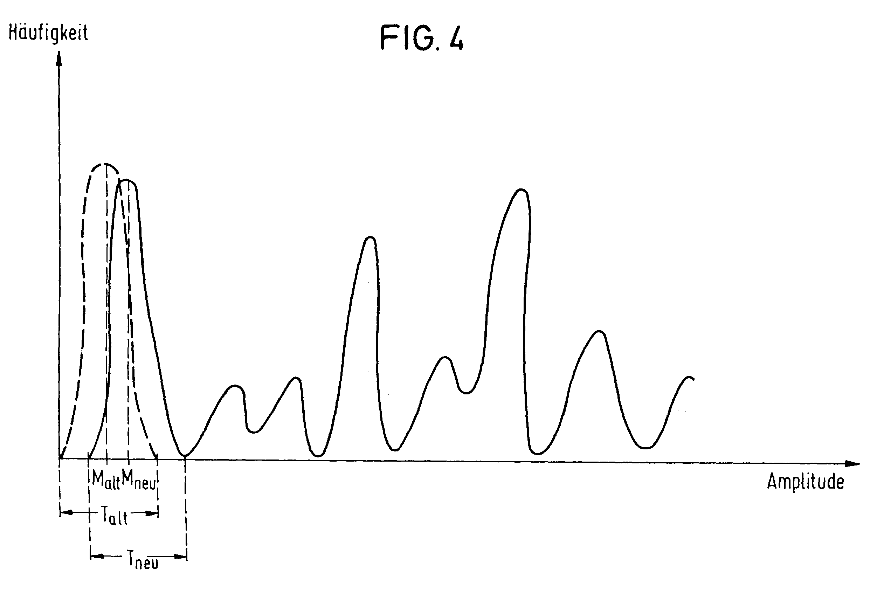

Die Darstellungen gemäß den Fig. 3 und 4 entsprechen im wesentlichen den Darstellungen gemäß Fig. 1 und 2, wobei in den Fig. 3 und 4 diejenigen Häufigkeitsverteilungen veranschaulicht sind, die beim Betrieb eines energetischen Tasters auftreten.

Da sowohl der Initialisierungsprozeß gemäß Fig. 3 als auch der Anpassungsprozeß gemäß Fig. 4 analog zu dem Initialisierungsprozeß gemäß Fig. 1 bzw. dem Anpassungsprozeß gemäß Fig.2 ablaufen, wird im folgenden lediglich der Unterschied zwischen dem Betrieb einer Reflex-Lichtschranke gemäß den Fig. 1 und 2 und dem Betrieb eines energetischen Tasters gemäß den Fig. 3 und 4 beschrieben.

Ein energetischer Taster empfängt bei objektfreiem Überwachungsbereich im wesentlichen nur sehr wenig Licht, da am Ende des Überwachungsbereichs kein Reflektor angeordnet ist. Dementsprechend sind die während eines Initialisierungsprozesses gemäß Fig. 3 ermittelten Amplituden deutlich niedriger als die während eines Initialisierungsprozesses gemäß Fig. 1 ermittelten Amplituden. Die gemäß Fig. 3 empfangenen Amplituden rühren im wesentlichen nur von Störlicht und Hintergrundreflexen her.

Bei in den Überwachungsbereich eines energetischen Tasters eingebrachten Objekten wird in der Regel eine größere Lichtmenge empfangen als bei objektfreiem Überwachungsbereich, da die eingebrachten Objekte Licht zum Lichtempfänger reflektieren. Somit wird nach einem Initialisierungsprozeß gemäß Fig.3 ein Gegenstandsfeststellungssignal dann abgegeben, wenn eine während des Betriebs des Sensors ermittelte Amplitude oberhalb des Maximums M bzw. oberhalb des Toleranzbereichs T liegt.

Dementsprechend liegen auch die gemäß Fig. 4 während eines Betriebs des Sensors ermittelten Amplituden, die durch Reflexion von Objekten hervorgerufen werden, oberhalb der während des Initialisierungsprozesses bzw. oberhalb der bei objektfreiem Überwachungsbereich ermittelten Amplituden.

Der Anpassungsvorgang gemäß Fig. 4 erfolgt jedoch im übrigen entsprechend dem Anpassungsvorgang gemäß Fig. 2, wobei jedoch wiederum ein Gegenstandsfeststellungssignal immer dann abgegeben wird, wenn nach dem Anpassungsvorgang eine empfangene Amplitude oberhalb des Toleranzbereichs Tₙₑᵤ liegt.

## Patentansprüche

1. Verfahren zum Betrieb eines opto-elektronischen Sensors, insbesondere einer Lichtschranke, bei dem mittels eines Lichtsenders ein Lichtsignal in einen Überwachungsbereich gesandt wird und ein zum Empfang von ausgesandten und reflektieren Lichtsignalen ausgelegter Lichtempfänger ein Signal liefert, dessen Amplitude auf Vorhandensein eines Objekts im Überwachungsbereich untersucht wird, wobei bei Über- oder Unterschreitung eines Amplituden-Schwellwerts ein Gegenstandsfeststellungssignal abgegeben wird,
dadurch **gekennzeichnet,**
daß vor Inbetriebnahme des Sensors im Rahmen eines Initialisierungsprozesses bei objektfreiem Überwachungsbereich der Schwellwert in Abhängigkeit von in einem bestimmten Meßzeitraum aufgetretenen Amplitudenwerten automatisch eingestellt und dadurch an die während des Initialisierungsprozesses gegebenen Betriebsbedingungen angepaßt wird.

2. Verfahren nach Anspruch 1,
dadurch **gekennzeichnet,**
daß die Häufigkeitsverteilung der während des Meßzeitraums auftretenden Amplituden ermittelt und der Schwellwert durch das Maximum (M) der ermittelten Häufigkeitsverteilung definiert wird.

3. Verfahren nach Anspruch 2,
dadurch **gekennzeichnet,**
daß ein das Maximum (M) der ermittelten Häufigkeitsverteilung umgebender Toleranzbereich (T) bestimmt wird, wobei insbesondere die Breite des Toleranzbereichs (T) in Abhängigkeit des Kurvenverlaufs der ermittelten Häufigkeitsverteilung im Bereich des Maximums (M) bestimmt wird.

4. Verfahren zum Betrieb eines opto-elektronischen Sensors, insbesondere einer Lichtschranke, bei dem mittels eines Lichtsenders ein Lichtsignal in einen Überwachungsbereich gesandt wird und ein zum Empfang von ausgesandten und reflektieren Lichtsignalen ausgelegter Lichtempfänger ein Signal liefert, dessen Amplitude auf Vorhandensein eines Objekts im Überwachungsbereich untersucht wird, wobei bei Über- oder Unterschreitung eines Amplituden-Schwellwerts ein Gegenstandsfeststellungssignal abgegeben wird,
dadurch **gekennzeichnet,**
daß der Schwellwert während des Sensorbetriebs in Abhängigkeit von in einem bestimmten Meßzeitraum aufgetretenen Amplitudenwerten automatisch nachgestellt und dadurch an die jeweils gegebenen Betriebsbedingungen angepaßt wird, wobei insbesondere eine Anpassung des Schwellwerts während des Sensorbetriebs in einem konstanten Zeitraster wiederholt wird.

5. Verfahren nach Anspruch 4,
dadurch **gekennzeichnet,**
daß die Häufigkeitsverteilung der während des Meßzeitraums auftretenden Amplituden ermittelt und der angepaßte Schwellwert durch das Maximum (M) der ermittelten Häufigkeitsverteilung definiert wird.

6. Verfahren nach einem der Ansprüche 4 oder 5,
dadurch **gekennzeichnet,**
daß der Meßzeitraum der gesamten Betriebszeit des Sensors seit einem Initialisierungsprozesses entspricht.

7. Verfahren nach einem der Ansprüche 4 bis 6,
dadurch **gekennzeichnet,**
daß ein das Maximum (M) der ermittelten Häufigkeitsverteilung umgebender Toleranzbereich (T) bestimmt wird, wobei insbesondere die Breite des Toleranzbereichs (9) in Abhängigkeit des Kurvenverlaufs der ermittelten Häufigkeitsverteilung im Bereich des Maximums (M) bestimmt wird.

8. Verfahren nach Anspruch 7,
dadurch **gekennzeichnet,**
daß eine Anpassung des Schwellwerts nur dann erfolgt, wenn ein während des Sensorbetriebs ermitteltes Maximum (Mₙₑᵤ) innerhalb des zuvor bestimmten Toleranzbereichs (Tₐₗₜ) liegt und/oder daR ein neuer Initialisierungsprozess ausgelöst oder angefordert wird, wenn ein während des Sensorbetriebs ermitteltes Maximum (Mₙₑᵤ) außerhalb des zuvor bestimmten Toleranzbereichs (Mₐₗₜ) liegt.

9. Verfahren nach einem der vorhergehenden Ansprüche,
dadurch **gekennzeichnet,**
daß ein Gegenstandsfeststellungssignal nur dann abgegeben wird, wenn ein während des Sensorbetriebs ermittelter Amplitudenwert oberhalb bzw. unterhalb des bestimmten Toleranzbereichs (T) liegt.

10. Verfahren nach einem der Ansprüche 1 bis 3,
**gekennzeichnet**
durch die Merkmale eines der Ansprüche 4 bis 9.

11. Verfahren nach einem der vorhergehenden Ansprüche,
dadurch **gekennzeichnet,**
daß bei Betrieb einer Reflex-Lichtschranke die ausgesandten Lichtsignale bei objektfreiem Überwachungsbereich von einem am dem Sensor gegenüberliegenden Ende des Überwachungsbereichs angeordneten Reflektor zum Lichtempfänger reflektiert werden.

12. Verfahren nach einem der Ansprüche 1 bis 10,
dadurch **gekennzeichnet,**
daß bei Betrieb eines energetischen Tasters die ausgesandten Lichtsignale bei objektfreiem Überwachungsbereich nicht zum Lichtempfänger reflektiert werden.

13. Verwendung eines Verfahrens nach einem der vorhergehenden Ansprüche zur Klarglaserkennung.
